# EUROPEAN PATENT SPECIFICATION

(11) **EP 2 983 050 B1**
(45) Date of publication and mention of the grant of the patent: **17.05.2017**
(21) Application number: 15177161.5
(22) Date of filing: 16.07.2015
(51) Int. Cl.: G05B 19/042, A01B 69/00

(54) **DRIVING SUPPORT SYSTEM**
FAHRUNTERSTÜTZUNGS SYSTEM
CONDUITE SYSTÈME DE SUPPORT

(30) Priority: 01.08.2014 JP 2014157700
(43) Date of publication of application: 10.02.2016
(73) Proprietor: Kubota Corporation, Osaka-shi, Osaka 556-8601 (JP)
(72) Inventor: KOBAYASHI, Takashi, Sakai-shi, Osaka 590-0823 (JP); KOMATSU, Shigeru, Sakai-shi, Osaka 590-0823 (JP); NISHI, Eiji, Sakai-shi, Osaka 590-0823 (JP); TAKAHASHI, Keiji, Sakai-shi, Osaka 590-0823 (JP); ISHIKAWA, Shinnosuke, Sakai-shi, Osaka 590-0823 (JP)
(74) Representative: Global IP Europe Patentanwaltskanzlei

(56) References cited:
- EP-A1- 1 873 602
- EP-A1- 2 583 544
- US-A1- 2001 016 794

## Description

### Field of the Invention

The present invention relates to a driving support system for a traveling work vehicle that works and travels using a ground work apparatus that is coupled to a traveling vehicle body.

### Background

A traveling work vehicle, such as a tractor, a rice transplanter or a combine harvester, repeats linear work travel and U-turns to perform work on a work field. In this case, during normal U-turn travel, a ground work apparatus is lifted from the work field so that the ground work apparatus does not hinder the turning travel. In order to perform travel in U-turn travel (which is also referred to as headland travel in agricultural field work), in addition to steering, a driver has to perform an operation to increase or decrease a vehicle speed, an operation to lift or lower the ground work apparatus, a PTO clutch operation, and the like within predetermined time intervals or predetermined distance intervals.

In order to reduce operation burden on a driver in such U-turn travel, in JP 2001-001845 A (corresponding to US 2001/0016794 A), a control unit is provided with a learning mode that stores, as a sequence, operation procedures of a driver that are performed when a tractor is traveling and a replay mode that executes the sequence. In this case, distances traveled between respective operations that configure the sequence are also stored. During replay of the sequence, the operations are executed at the same distance intervals as during learning, regardless of the speed of the vehicle. Two sequences can be stored. The two sequences can be distinctively learned and read-out using a toggle type sequence switch. The two sequences are specified as a sequence 1 and a sequence 2. In order to indicate a sequence selected using the sequence switch, "1" or "2" is displayed on a display. In a sequence management system according to Japanese Patent Laid-Open Publication No. 2001-001845, two sequences can be stored and a desired sequence can be executed. However, since only a number of a selected sequence is displayed on the display, it is difficult for the driver to understand content of the sequence from the display.

European Patent No. 1873602 discloses a headland travel management system in which a sequence of operations executed during headland travel, such as selecting a speed change ratio and lifting or lowering a ground work apparatus, is recorded and the sequence of the operations is read out This system displays in a display the stored operations using ordinal numbers in an execution order. However, in the system according to European Patent No. 1873602, managing a plurality of sequences is not disclosed. Therefore, this system is disadvantageous in managing work-travel having a mixture of a plurality of sequences configured by different operations. Further, in this system, distance intervals or time intervals of the operations configuring one sequence, which are displayed in execution order in the display, are unclear. Using the display alone, it is difficult for a driver to accurately understand the sequence.

EP 2 583 544 A1 discloses a device for visualizing control operations of an agricultural working machine. The device comprises a visualization device that visualizes at least one driving path to be travelled by the agricultural working machine and a control/regulating device that stores the at least one driving path and a control sequence of control operations, wherein graphic images of the control operations are displayed in the visualization device along the driving path to be travelled in an order in which the control operations are carried out.

### Summary

In view of the above, a first aspect of the present invention provides a driving support system for a traveling work vehicle that works and travels utilizing a ground work apparatus that is coupled to a traveling vehicle body, comprising: a device controller configured to output operation control signals to a travel operation device for causing the traveling vehicle body to travel and a work operation device for causing the ground work apparatus to operate; a display configured to display operation states of the travel operation device and the work operation device; storing means configured to store control data in execution processing order as a work-travel sequence, the control data corresponding to the operation control signals; a read-out means configured to read out the control data stored in the storing means and transmit the control data to the device controller, a screen processor configured to generate, based on the control data, image data to indicate icons in the execution processing order, and output the generated image data to the display so as to display a work-travel sequence screen; and a plurality of work-travel managers configured to manage a plurality of work-travel sequences on the work-travel sequence screen.

According to the above configuration, a plurality of work-travel sequences can be managed on the same work-travel sequence screen. Each work-travel sequence includes control data corresponding to operation control signals that configure a work-travel sequence. Control data of each work-travel sequence is converted into an icon. In other words, an icon is assigned to control data of each work-travel sequence. An icon to which control data is assigned is displayed in execution processing order on the work-travel sequence screen. A plurality of work-travel sequences, which is specified by an array of icons arranged in execution processing order, is managed on the same work-travel sequence screen. As a result, similarities and differences between the plurality of the work-travel sequences can be easily understood. In particular, when the plurality of work-travel sequences is associated with each other, mutual consistency can be ensured and work-travel quality can be improved.

According to a preferred embodiment of the driving support system mentioned above, the driving support system further comprises a plurality of execution processing means, each configured to perform a process, wherein the screen processor is further configured to generate the image data to indicate the icons each of which corresponds to each execution processing means.

According to another preferred embodiment of any one of the driving support systems mentioned above, the storing means is configured to store control data based on operation control signals outputted during a teaching travel mode.

When a teaching travel mode is performed, a travel performed by the traveling work vehicle is realized as a model travel by the driving support system. During the teaching travel mode, control data is stored on the storing means.

A work-travel sequence recorded by the storing means becomes an example or a standard of work-travel that will be repeatedly executed in the future. Therefore, it is desirable that the work-travel sequence be based on work-travel that is actually performed at the same work field.

According to another preferred embodiment of any one of the driving support systems mentioned above, the driving support system further comprises an editor configured to manage editing of the work-travel sequence via the work-travel sequence screen.

According to the configuration above, with respect to a work-travel sequence that is represented by icons that are arranged in execution processing order, editing such as modification and addition can be performed on the work-travel sequence screen.

According to another preferred embodiment of any one of the driving support systems mentioned above, the driving support system further comprises an attribute manager configured to assign, on the work-travel sequence screen, at least one of a work time and a travel distance to an icon that configures the work-travel sequence.

A point of time to execute control data corresponding to the work-travel sequence can be specified using a work time or a travel distance that indicates work progression. The point of time is, in other words, a point of time to output an operation control signal.

The attribute manager assigns, on the work-travel sequence screen, a work time or a travel distance to an icon that configures the work-travel sequence. The work time or the travel distance is assigned as an attribute of a processing unit represented by the icon. In this way, the point of time (hereinafter output timing) to output control data corresponding to an icon is assigned as an attribute value with the icon. Therefore, the output timing can be adjusted by specifying an icon related to desired control data.

One of preferable embodiments of the work-travel sequence screen, on which the attribute manager assigns an attribute to an icon, is now explained. In a region extending into a right half of the work-travel sequence screen, an icon group illustrating content of a work-travel sequence is vertically arranged. On a left side of each icon, an indicator of an output timing that is an attribute value of the icon is displayed using a time or a distance as a unit.

According to another preferred embodiment of any one of the driving support systems having the attribute manager mentioned above, the attribute manager is further configured to determine at least one of the work time and the travel distance to be assigned based on a speed of the traveling vehicle body.

Work time is suitable as the output timing for some control data, and travel distance is suitable as the output timing for other control data. For example, when the traveling work vehicle performs work while traveling at a, low speed, a travel distance between adjacent execution processing units is short and an error is likely to occur in a calculated travel distance. Further, when the traveling work vehicle performs work while traveling at a high speed, an elapsed time between adjacent execution processing units is short and an error is likely to occur in a calculated elapsed time.

According to another preferred embodiment of any one of the driving support systems mentioned above, the work-travel sequence screen has selection buttons adapted to select a work-travel sequence to be displayed on the work-travel sequence screen from the plurality of work-travel sequences that are managed by the plurality of the work-travel managers.

When the plurality of work-travel sequences is managed on the work-travel sequence screen, it is difficult to display all of the work-travel sequences because of a size of a screen of the display.

Therefore, selection buttons are preferably arranged on the work-travel sequence screen to select, from the plurality of work-travel sequences that are managed by the plurality of the work-travel managers, a work-travel sequence to be displayed on the work-travel sequence screen. Content of the plurality of the work-travel sequences is not all displayed at once. Each work-travel sequence is identified by a selection button. By operating the selection button, content of the work-travel sequence linked to the selection button is displayed. Thereby, the limited screen of the display can be effectively utilized.

One of preferred embodiments of the work-travel sequence screen with the selection buttons is now explained. The work-travel sequence screen has a selection button SB1 and another selection button SB2. The selection button SB1 is linked to a work-travel sequence that is performed in a transition region from linear travel to a headland turn. The selection button SB2 is linked to another work-travel sequence that is performed in another transition region from a headland turn to linear travel. Therefore, it is advantageous to clearly indicate the connection between the two selection buttons SB1, SB2 in a visible form. Thereby, the two selection buttons SB1, SB2 can be treated as one set or one group. For example, the selection buttons SB1, SB2 are preferably surrounded using a frame, or are preferably indicated using the same color. Or, a form is preferably adopted in which the selection buttons SB1, SB2 are connected using a linking line and the like. It is preferable to indicate one group of selection buttons in a form visibly distinguishable from other group of selection buttons, when two or more groups of selection buttons are indicated on the work-travel sequence screen.

It is preferable to initiate a work-travel sequence by operating a start button arranged on the travel work vehicle. According to a preferred embodiment, a first work-travel sequence specified by the selected button SB1 is initiated by pressing a first start button STB1 that is arranged in an armrest operation device 4 of the travel work vehicle. Similarly, a second work-travel sequence specified by the selected button SB2 is initiated by pressing a second start button STB2. Even when there are more work-travel sequences, each work-travel sequences can be similarly initiated by corresponding buttons. It is preferable that the execution of the first work-travel sequence initiated by the first start button STB2 can be interrupted by pressing the first start button STB1 again. Control data corresponding to the interrupted work-travel sequence is resumed being executed from the point of interruption to continue and accomplish the work-travel sequence. It is further preferable that the first work-travel sequence initiated can be completely stopped upon pressing the second start button STB2. The first work-travel sequence that has been stopped by pressing the second start button STB2 can be preferably initiated again by pressing the first start button STB1.

The above-described interruption of a work-travel sequence is specifically described taking another preferred embodiment as an example. In a case where the first work-travel sequence is to lift the ground work apparatus, the first work-travel sequence includes an opening control of a lifting valve, a PTO (power take-off) control and a differential lock control. After the opening control of the lifting valve is performed, when the sequence is interrupted by pressing the first start button STB1, the lifting valve remains open. Therefore, the ground work apparatus is lifted to a predetermined position. When the PTO control and the differential lock control have not yet been performed at the time when the sequence is interrupted, the PTO control and the differential lock control are in a standby state. In this state, when the interrupted first work-travel sequence is resumed by pressing the first start button STB1, the PTO control and the differential lock control are sequentially executed. In contrast, when the first work-travel sequence is stopped by pressing the second start button STB2, the lifting valve is also immediately blocked, and the ground work apparatus is held at a position occupied at the time. Therefore, it is effective to stop the work-travel sequence completely upon a press of a predetermined button when an emergency stop or the like is necessary.

According to another preferred embodiment of any one of the driving support systems mentioned above, one of the plurality of the work-travel sequences is a headland-turn-start sequence that includes operation control signals required during transition from work travel to headland turn travel, another one of the plurality of the work-travel sequences is a headland-turn-end sequence that includes operation control signals required during a transition from the headland turn travel to the work travel, and the headland-turn-start sequence and the headland-turn-end sequence are managed as a group of sequences on the work-travel sequence screen.

For a traveling work vehicle, such as a tractor, a rice transplanter or a combine harvester, performing agricultural work on an agricultural field, during headland turn travel, a number of operations that a driver has to perform increases. More specifically, in headland turn travel, during a transition from linearly traveling work travel to headland turn travel, an operation to switch a ground work apparatus from an operation state to a non-operation state is required. During a transition from headland turn travel to work travel, an operation to switch the ground work apparatus from the non-operation state to the operation state is required. In these two traveling states in which the driver becomes busy, the driving support system according to the present embodiment is effective.

According to another preferred embodiment of any one of the driving support systems mentioned above, the headland-turn-start sequence and the headland-turn-end sequence are managed via a pair buttons on the work-travel sequence screen; and/or managed via different buttons displayed on the work-travel sequence screen.

A second aspect of the present invention provides a driving support system for a traveling work vehicle utilizing a deployable ground work apparatus, comprising: a device controller configured to control movement or operate the traveling work vehicle and the deployable ground work apparatus; a display configured to display operation states of the traveling work vehicle and/or the deployable work operation device; a storing means configured to store control data in an execution processing order as a work-travel sequence; a read-out means configured to read out the control data stored in the storing means and transmit the control data to the device controller; a screen processor configured to convert the control data to display data and output to the display a work-travel sequence screen with icons arranged in an execution processing order; and a headland management unit configured to manage a plurality of the work-travel sequences on the work-travel sequence screen.

According to a preferred embodiment of the driving support system according to the second aspect of the invention, the headland management unit has a plurality of work-travel managers that are configured to manage the plurality of the work-travel sequences on the work-travel sequence screen.

According to another preferred embodiment of any one of the driving support systems according to the second aspect of the invention mentioned above, a first displayed work-travel sequence screen is indicative of a transition from linear travel to headland turn and is shown on the display with a first display button being activated; a second displayed work-travel sequence screen is indicative of a transition to linear travel from headland turn and is shown on the display with a second display button being activated; and the first and second work-travel sequence screens are shown on the display as a group of sequences.

### Brief description of the drawings

Preferred embodiments of the present invention are further described in the detailed description which follows, in reference to the noted plurality of drawings by way of non-limiting examples of exemplary embodiments of the present invention, in which like reference numerals represent similar parts throughout the several views of the drawings, and wherein:
Fig. 1 is a schematic diagram that describes a basic principle of a driving support system according to a preferred embodiment of the present invention;
Fig. 2 is a side view of a tractor that is an example of a traveling work vehicle on which the driving support system according to the preferred embodiment of the present invention is mounted;
Fig. 3 is a plan view of an armrest operation device;
Fig. 4 is a perspective view of a multifunction operation tool arranged in the armrest operation device;
Fig. 5 is a functional block diagram illustrating functions of a control system that is equipped on the tractor, the functions being particularly related to the preferred embodiment of the present invention;
Fig. 6 is a screen diagram illustrating an example of a work-travel screen that displays a work sequence during recording;
Fig. 7 is a screen diagram illustrating an example of a work-travel screen that displays a work sequence during read-out; and
Fig. 8 is a schematic diagram illustrating a transition of a work-travel screen that displays a work sequence to an editing work screen.

### Detailed description of preferred embodiments

The particulars shown herein are by way of example and for purposes of illustrative discussion of the preferred embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description taken with the drawings making apparent to those skilled in the art how the forms of the preferred embodiments of the present invention may be embodied in practice.

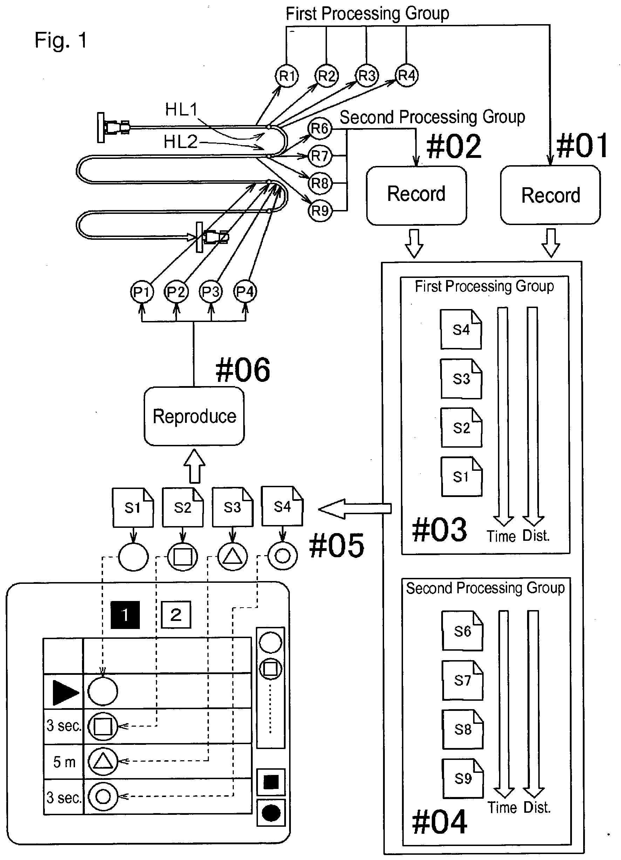

Before describing a preferred embodiment of a driving support system according to the present invention, a basic principle thereof is described using Fig. 1. Here, the driving support system is configured to automatically perform at least a part of a sequence of operations that are performed during a headland turn.

In agricultural work on an agricultural field and the like, a work vehicle repeats reciprocating linear travel while performing headland turns (U-turns) on a headland (peripheral region of an agricultural field). In this case, in a transition region (indicated by HL1 in Fig. 1) from linear travel to headland turn, operations are performed such as turning on 4WD, turning off PTO (power take-off), and raising a ground work apparatus from a work position to a retreat position. Further, in a transition region (indicated by HL2 in Fig. 1) from headland turn to linear travel, operations are performed such as turning off 4WD, turning on PTO (power take-off), and lowering the ground work apparatus from the retreat position to the work position. It is necessary to perform such a series of operations for each headland turn. The driving support system of the present embodiment reduces burden on a driver by recording content of a series of operations that have been performed once and thereafter reproducing the recorded content of the operations to automatically execute the series of operations.

In this case, in the example illustrated in Fig. 1, operations that are performed in the transition region HL1 from the linear travel to the headland turn are recorded as a first processing group (#01), and operations that are performed in the transition region HL2 from the headland turn to the linear travel are recorded as a second processing group (#02). In this example, control data (indicated by S1, S2, S3, and S4 in Fig. 1) corresponding to operation control signals that are output to a work operation device causing a ground work apparatus to operate according to operations by the driver at respective points (indicated by R1, R2, R3, and R4 in Fig. 1) in the transition region HL1 is recorded as a work-travel sequence in a work time series and a travel distance series (#03). Further, control data (indicated by S6, S7, S8, and S9 in Fig. 1) corresponding to operation control signals that are output to the work operation device causing the ground work apparatus to operate according to operations by the driver at respective points (indicated by R6, R7, R8, and R9 in Fig. 1) in the transition region HL2 is recorded as a work-travel sequence in a work time series and a travel distance series (#04).

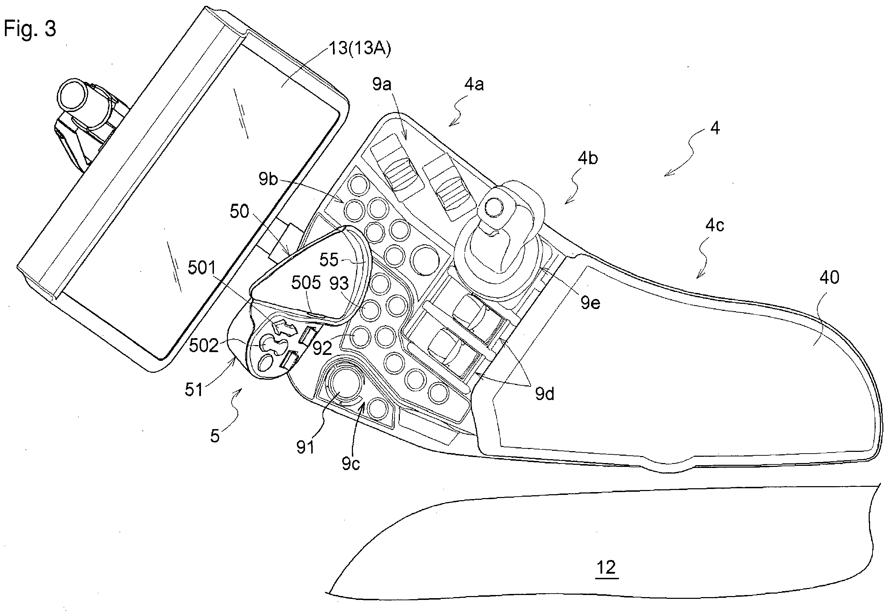

The work-travel sequence recorded as described above is displayed as a work-travel sequence screen in a display. In this case, in order for the work-travel sequence to be easily understood by the driver, control content of the control data that configures execution processing units is converted into pictographic icons (simply indicated using symbols such as e.g., ○ and Δ in Fig. 1), which are displayed in execution processing order (#05). When the control data is recorded, positions in the work time series and in the travel distance series, at which the control data is output, are acquired as output timing information. Therefore, based on the positions, the output timing information is attached to the respective icons as attribute values. Therefore, next to each of the icons displayed in the display, an attribute value is displayed. The output timing can be displayed by either a work time or a travel distance. For example, as illustrated in Fig. 1, 3 seconds after an operation indicated by a white circle icon is performed, an operation indicated by a square icon is performed and, subsequently, after traveling for 5 m, an operation indicated by a Δ icon is performed.

In the driving support system according to the present embodiment, a plurality of work-travel sequences are managed. In the example of Fig. 1, the first processing group of the transition region HL1 and the second processing group of the transition region HL2 are respectively managed as a first work-travel sequence and a second work-travel sequence. Therefore, in the work-travel sequence screen of Fig. 1, on an upper part thereof, a button indicated as "1" and a button indicated as "2" are illustrated. When the button "1" is pressed, the first work-travel sequence is enabled, and an array of icons included in the first work-travel sequence is displayed. When the button "2" is pressed, the second work-travel sequence is enabled, and an array of icons included in the second work-travel sequence is displayed.

Further, when control values such as a rising speed and a rising height are included in control data that links to an icon meaning to raise the ground work apparatus, such control values can be edited via a pop-up window or the like.

Read-out of the recorded work-travel sequence, that is, output of the operation control signals corresponding to the control data is started by operating an operation tool for read-out in the corresponding transition region HL1 (#06). The operation control signals are output at timings (indicated by P1, P2, P3, and P4 in Fig. 1) based on work times or travel distances that are linked to the corresponding control data.

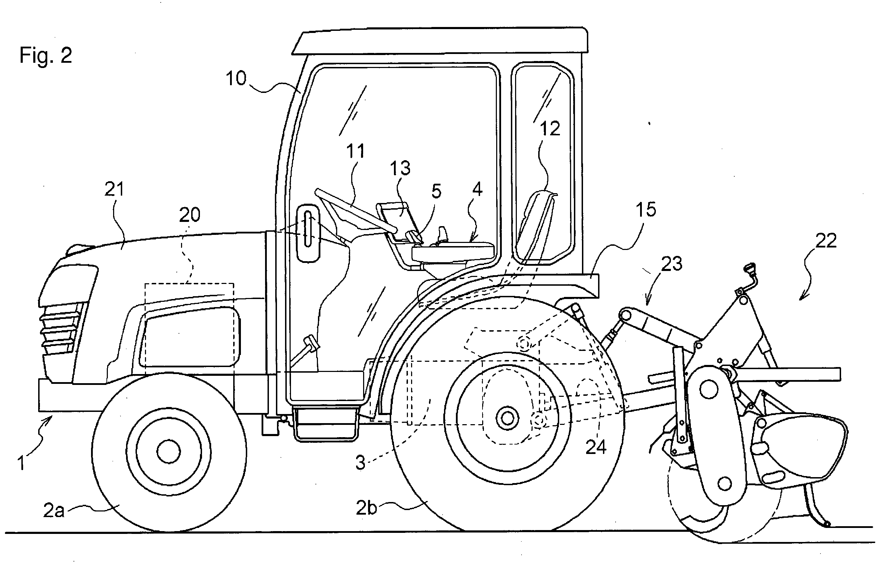

Next, a specific embodiment of the driving support system according to the present embodiment is described. Fig. 2 is a side view of a tractor that is an example of a traveling work vehicle on which the driving support system having the basic principle described using Fig. 1 is mounted. In the tractor, an engine 20 is mounted on a front part of a vehicle body 1 of the tractor and a transmission 3 is mounted to the rear of the engine 20, the vehicle body 1 being supported by front wheels 2a and rear wheels 2b. To the rear of the vehicle body 1, a rotary tilling apparatus as a ground work apparatus 22 is equipped so as to be vertically movable via a lift mechanism 23. The tractor has four-wheel drive. Power of the engine 20 is transmitted via a transmission mechanism installed inside the transmission 3 to the front wheels 2a and rear wheels 2b that are capable of acting as drive wheels. Further, the power of the engine 20 is also transmitted to the ground work apparatus 22 via a PTO shaft 24 that protrudes to the rear from the transmission 3. The engine 20 is covered by a hood 21. To the rear of the hood 21 and above the transmission 3, a cabin 10 is supported by the vehicle body 1.

An interior of the cabin 10 acts as a driving space. At a front part of the driving space, a steering wheel 11 steering the front wheels 2a is arranged and, at a rear part of the driving space, a driver's seat 12 is arranged between a pair of left and right rear wheel fenders 15. From one side of the driver's seat 12 toward the front, an armrest operation device 4 having a multifunction operation tool 5 is provided. In front of the armrest operation device 4, a display 13 visually notifying the driver of various information is provided. The display 13 allows an input operation to be performed via a touch panel 13A (see Fig. 3) and can accept various operation inputs by the driver.

As illustrated in Fig. 3, the armrest operation device 4 can be divided in a plan view into a front area 4a, a middle area 4b and a rear area 4c. In the rear area 4c, a cushioned armrest base 40 on which a driver's arm rests is provided. In substantially a left half of the front area 4a, a multifunction operation tool 5 (to be described in detail later) is provided. In substantially a right half of the front area 4a, as operation switch groups 9, a first operation switch group 9a and a second operation switch group 9b are arranged. Also in the middle area 4b, as the operation switch groups 9, from left, a third operation switch group 9c, a fourth operation switch group 9d and a fifth operation switch group 9e are arranged. In each of the operation switch groups 9, operation switches formed in various types such as a button, a switch, a dial, a lever and a joystick are provided. Those related to the present embodiment include a dial 91, a first read-out button 92 and a second read-out button 93 that belong to the third operation switch group 9c. The dial 91 is used to set a work position (tilling depth) of the ground work apparatus 22. By rotationally operating this setting dial 91, the work position of the ground work apparatus 22 can be adjusted. The first read-out button 92 and the second read-out button 93 can be used to start read-out of the work-travel sequences that are described using Fig. 1. That is, by operating the first read-out button 92, the first work-travel sequence starts, and by operating the second read-out button 93, the second work-travel sequence starts.

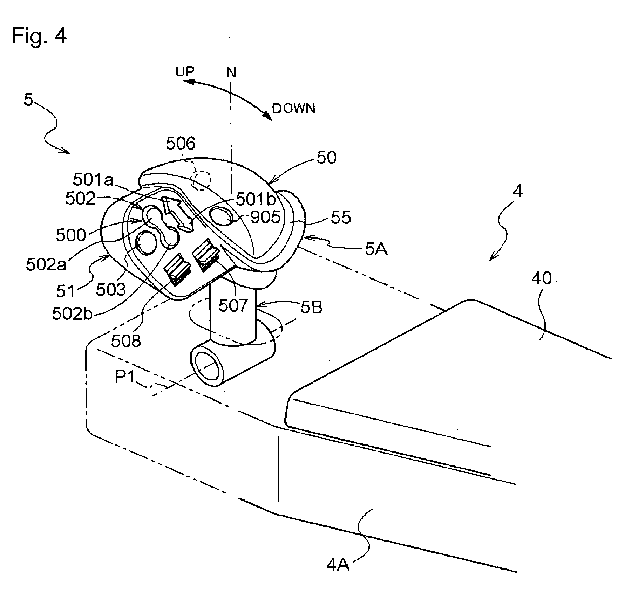

As illustrated in Fig. 4, the multifunction operation tool 5 is arranged in a front end area on the left side of the armrest base 40 and is supported in a manner swingable about a swing axis P1. The multifunction operation tool 5 is used to control a traveling state of the tractor and a state of the ground work apparatus 22 that is equipped on the tractor. The multifunction operation tool 5 is configured, substantially, by a grip body 5A and a swing body 5B. The swing body 5B is formed as an arm member that swings about the swing axis P1. The vehicle is accelerated by swinging the swing body 5B in a forward direction (UP) (upshift) from a swing neutral position of the swing body 5B and is decelerated by swinging the swing body 5B in a backward direction (DOWN) (downshift).

The grip body 5A is provided on a free end side of the swing body 5B. As illustrated in Fig. 4, the grip body 5A is configured by a grip part 50 that is formed in a right side area, here substantially a right half area, and an extension part 51 that is formed in a left half area. On at least a portion of a lower edge of the grip part 50, a tongue piece projecting outward is formed as a hypothenar rest 55.

On the grip body 5A, an operation switch group 500 that can be operated with fingers of a hand holding the grip part 50 is arranged. The operation switch group 500 includes a shuttle button 501, a speed change ratio fixing button 503, a speed change auxiliary button 505, a shuttle auxiliary button 506, a lift button 502, two hydraulic control switches 507 and 508, and the like. The shuttle button 501, the speed change ratio fixing button 503, the speed change auxiliary button 505 and the shuttle auxiliary button 506 belong to a travel-related operation switch group. The lift button 502 and the two hydraulic control switches 507 and 508 belong to a work-related operation switch group. The speed change auxiliary button 505 and the shuttle auxiliary button 506 are arranged to be operable by an index finger or a middle finger of the hand holding the grip part 50, and the other buttons and switches are arranged to be operable by a thumb of the hand holding the grip part 50.

The lift button 502 acts as a lift operation tool to lift or lower the ground work apparatus 22, which here is a tilling apparatus, through operation of the lift mechanism 23. When an upper part 502a of the lift button 502 is pressed, the ground work apparatus 22 is lifted, and when a lower part 502b of the lift button 502 is pressed, the ground work apparatus 22 is lowered.

Switching (shift up, shift down) of a speed change stage in the transmission 3 is performed by a swinging operation of the grip part 50 about the swing axis P1. The transmission 3 is provided with a main speed change device and an auxiliary speed change device. A speed change stage switching operation involving only the main speed change device without involving the auxiliary speed change device is enabled even without pressing the speed change auxiliary button 505. However, a speed change stage switching operation involving the auxiliary speed change device is disabled when the speed change auxiliary button 505 is not pressed. Further, when the shuttle auxiliary button 506 is pressed and a place of a shuttle upward arrow of the shuttle button 501 is pressed, the tractor is switched to a forward travel state, and when the shuttle auxiliary button 506 is pressed and a place of a downward arrow of the shuttle button 501 is pressed, the tractor is switched to a reverse travel state.

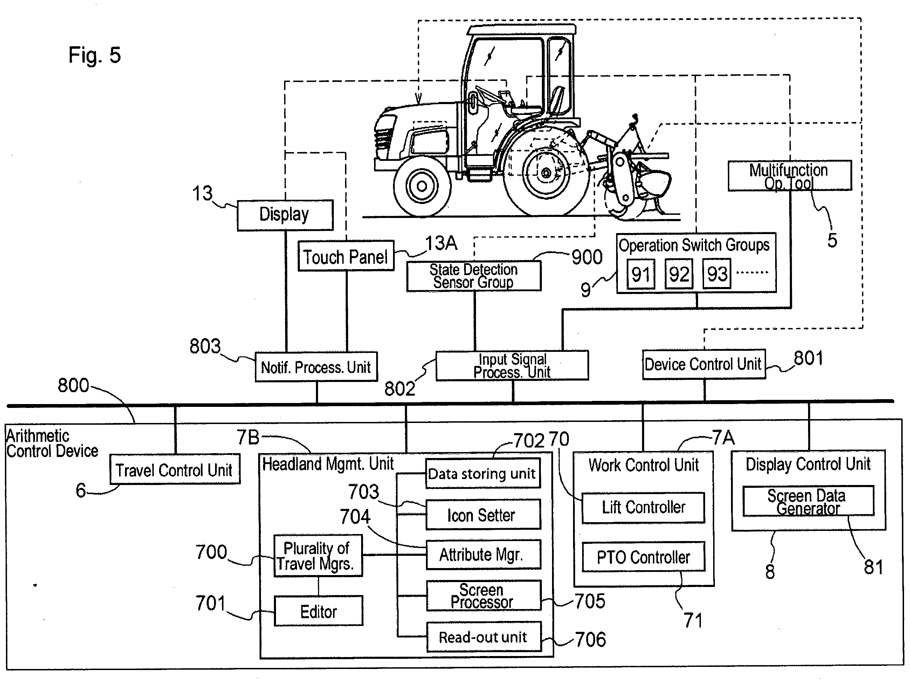

In Fig. 5, a control system equipped on the tractor is illustrated in the form of a functional block diagram. In the control system, functional parts that construct functions that are mainly realized by computer programs are illustrated as an arithmetic control device 800. However, this division is merely for purposes of description. For construction of an actual control system, arbitrary division or integration is possible. The arithmetic control device 800 is connected to other units via an on-vehicle LAN and the like so that data can be transmitted between them. Examples of such units include a device control unit 801 (i.e., device controller), an input signal processing unit 802, a notification processing unit 803, and the like. Further, inside the arithmetic control device 800, respective functional parts or functional units are also connected to each other via the on-vehicle LAN or other data transmission path such that data can be transmitted between them.

The device control unit 801 transmits operation signals to various operation devices that are provided to the engine 20, the transmission 3, the ground work apparatus 22 and the like and controls operations thereof. The input signal processing unit 802 acts as an input interface, inputs signals from the multifunction operation tool 5, the operation switch group 9 and a state detection sensor group 900, and transmits the signals to respective functional parts of the control system. The state detection sensor group 900 includes various sensors and meters such as a distance sensor that detects a travel distance, a timer that measures a travel time and a work time, a sensor that detects a vehicle speed and a sensor that detects a height of the ground work apparatus 22. The notification processing unit 803 acts as an input/output interface, and processes an image signal to the display 13, an audio signal to a speaker 14, or an operation input signal from the touch panel 13A.

The arithmetic control device 800 illustrated in Fig. 5 includes a travel control unit 6, a work control unit 7A, a headland management unit 7B that is a functional part that forms a core of the drive support system of the embodiment, a display control unit 8 and the like.

The travel control unit 6 outputs via the device control unit 801 a speed change control command to a main speed change device and an auxiliary speed change device that configure the transmission 3 and creates a vehicle speed change ratio due to a combination of speed change stages of the main speed change device and the auxiliary speed change device. Further, the travel control unit 6 also performs ON/OFF control of a differential lock and 2WD/4WD switching control.

The display control unit 8 includes a screen data generator 81. The screen data generator 81 generates screen data displaying in the display 13 information based on data generated in the arithmetic control device 800, and transmits the screen data to the notification processing unit 803. As a result, various information beneficial to the driver, for example, information (including an operation state of a travel operation device) related to travel control such as a vehicle speed and an engine rotation speed, and operation information (including an operation state of a work operation device) related to the ground work apparatus 22, is displayed in the display 13.

The work control unit 7A performs control of the lift mechanism 23 and the ground work apparatus 22 based on signals from the multifunction operation tool 5 and the operation switch group 9. In the work control unit 7A, a lift controller 70 and a PTO controller 71 are provided. The lift controller 70, based on an operation input signal from the lift button 502 that acts as a lift operation tool, generates control data with respect to the lift mechanism 23 and controls, via the device control unit 801, lifting or lowering of the ground work apparatus 22. The lift controller 70 can also control a lifting or lowering speed of the ground work apparatus 22. The PTO controller 71 controls power transmission to the ground work apparatus 22 by operating a PTO clutch (which is not illustrated here in the drawings).

In the headland management unit 7B, in order to realize the functions described using Fig. 1, a plurality of work-travel managers 700, an editor 701, a data storing unit 702, an icon setter 703, an attribute manager 704, a screen processor 705 and a read-out unit 706 are included.

The data storing unit 702 records, as a work-travel sequence in execution processing order, control data corresponding to operation control signals that are output from the device control unit 801 to the travel operation device causing the tractor to travel and to the work operation device causing the ground work apparatus 22 to operate. Conversely, the read-out unit 706 reads out the control data recorded by the data storing unit 702 and transmits the control data to the device control unit 801. The device control unit 801 outputs operation control signals corresponding to the received control data to the travel operation device and the work operation device to realize the work-travel sequence that is previously recorded. In the data storing unit 702, a learning algorithm is provided. When the tractor performs teaching travel in a headland turn region and the like, control data is recorded so that travel modeled on the teaching travel is realized. After a portion of an identical travel process in an identical agricultural field is performed once by the driver, the portion of the identical travel process can be automatically repeated by the read-out unit 706.

The icon setter 703 links control data of each execution processing unit that is recorded by the data storing unit 702 to an icon that pictographically illustrates content of the execution processing unit. As a result, one work-travel sequence can be represented by an array of a plurality of icons. Information that indicates execution timing of an execution processing unit using a work time and a travel distance is linked to the execution processing unit that is recorded by the data storing unit 702. By using this fact, the attribute manager 704 can assign a work time or a travel distance to an icon that configures a work-travel sequence, as an attribute of the processing unit that is represented by the icon. The screen processor 705, in conjunction with the icon setter 703 and the attribute manager 704, converts the control data of each execution processing unit to an icon, generates a work-travel sequence that includes one or more icons, and transmits data generating a work-travel sequence screen that represents content of the work-travel sequence to the screen data generator 81 of the display control unit 8.

The editor 701 edits the content of the work-travel sequence according to an instruction input via the touch panel 13A by the driver viewing the work-travel sequence screen displayed on the display 13. In this case, a plurality of the work-travel managers 700 manage a plurality of the work-travel sequences so that only content of a work-travel sequence that is activated by a button operation or the like is displayed in the work-travel sequence screen.

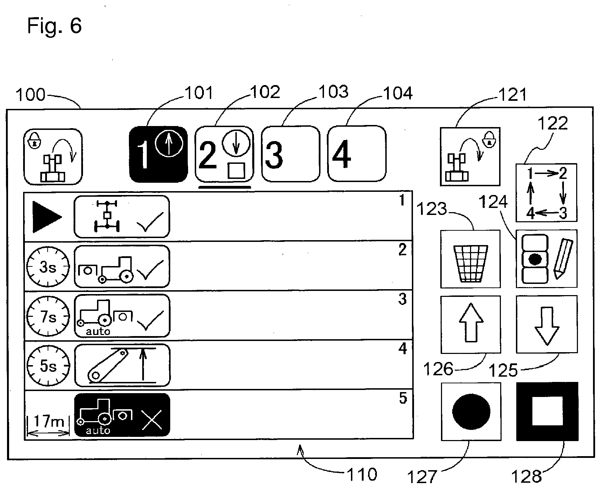

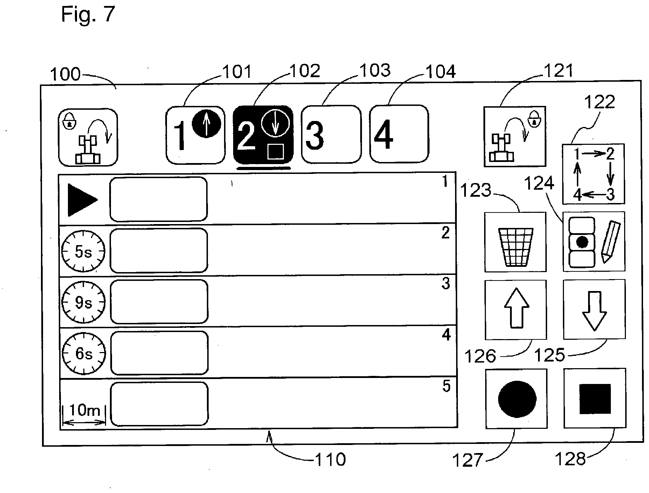

Figs. 6 and 7 illustrate an example of work-travel sequence screens. Fig. 6 is a work-travel sequence screen 100 illustrating a work-travel sequence that is performed in the transition region HL1 from linear travel to a headland turn described in Fig. 1. Fig. 7 is the work-travel sequence screen 100 illustrating a work-travel sequence that is performed in the transition region HL2 from a headland turn to linear travel.

In an upper end region of the work-travel sequence screen 100, a sequence selection button group for selecting a work-travel sequence to be activated is arranged. The sequence selection button group in Fig. 6 includes a button 101 to which "1" is assigned, a button 102 to which "2" is assigned, a button 103 to which "3" is assigned, and a button 104 to which "4" is assigned. An assigned number means a number of a work-travel sequence. For example, the "1" button 101 is a button activating a first work-travel sequence. Arrows assigned to the button 101 and the button 102 indicate that read-out buttons starting the work-travel sequences specified by the button 101 and the button 102 have been set. That is, starting the first work-travel sequence is assigned to the first read-out button 92 provided on the armrest operation device 4, and starting the second work-travel sequence is assigned to the second read-out button 93.

As described above, the button 101 and the button 102 are respectively linked to the work-travel sequence that is performed in the transition region HL1 from linear travel to a headland turn and the work-travel sequence that is performed in the transition region HL2 from a headland turn to linear travel, within one headland turn, and are closely related. Therefore, it is advantageous to clearly indicate that the button 101 and the button 102 are to be treated as one set. For example, the button 101 and the button 102 may be surrounded using a frame, or may be displayed using the same color. Or, a form may be adopted in which the button 101 and the button 102 are connected using a linking line of some kind. It is preferable that, of the sequence selection button group, buttons that are advantageous to be treated as a set be displayed in a form distinguishable from other buttons.

In a region extending into a right half of the work-travel sequence screen 100, an icon group 110 illustrating content of a work-travel sequence is vertically arranged. On a left side of each icon, an output timing that is an attribute value of the icon is displayed using a time or a distance as a unit.

In a right end region of the work-travel sequence screen 100, an operation button group is arranged. By operating a button 121, automatic control of work-travel sequences is turned ON/OFF. By operating a button 122, four work-travel sequences are sequentially activated. By operating a button 123, a work-travel sequence that has been activated is deleted. By operating button 125 and button 126, the icon group 110 is scrolled up and down. A button 127 is a button starting recording of a work-travel sequence, and a button 128 is a button stopping the recording.

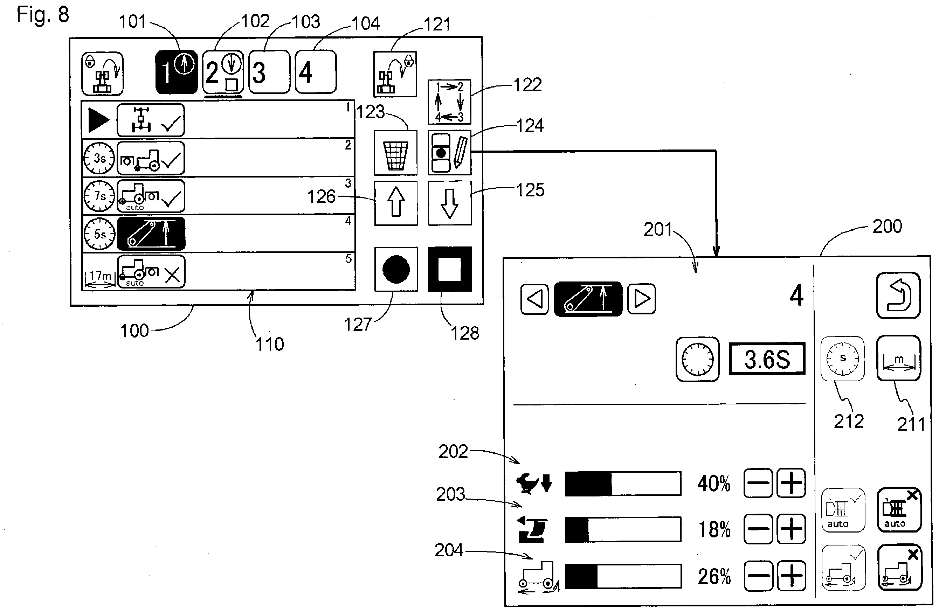

As illustrated in Fig. 8, a button 124 is an edit button enabling editing of a work-travel sequence using the editor 701. By operating the button 124, an edit screen 200 to edit control data assigned to an active icon is displayed. In the edit screen 200, operation elements to edit the control data are arranged. For example, an operation element 202 adjusting a lowering speed, an operation element 203 adjusting a work depth, an operation element 204 adjusting a slip amount, and the like are arranged. At an upper right of the edit screen 200, a distance display button 211 to display an output timing of an operation control signal using a travel distance, and a time display button 212 to display the output timing of the operation control signal using a work time are arranged. A distance displayed by operating the distance display button 211 or a time displayed by operating the time display button 212 can be modified via the edit screen 200. Further, the attribute manager 704 determines whether to display the output timing using either a work time or a travel distance based on a speed of the vehicle body 1.

The first work-travel sequence specified by the button 101 is started by pressing the first read-out button 92 that is arranged in the armrest operation device 4. Similarly, the second work-travel sequence specified by the button 102 is started by pressing the second read-out button 93. Even when there are more work-travel sequences, the work-travel sequences can be similarly processed. In this embodiment, during execution of the first work-travel sequence that is started by pressing the first read-out button 92, the execution can be interrupted by pressing again the first read-out button 92. Further, by pressing once again the first read-out button 92, the interrupted first work-travel sequence can be resumed. Thereby, the first work-travel sequence can be continued from the interrupted point to accomplish the sequence. In order to completely stop the first work-travel sequence that has been started once, the second read-out button 93 is pressed. The first work-travel sequence that has been stopped by pressing the second read-out button 93 can be restarted by pressing again the first read-out button 92.

The above-described interruption of the work-travel sequence is specifically described. In a case where the first work-travel sequence is to lift the ground work apparatus 22, the first work-travel sequence includes an opening control of a lifting valve, a PTO control and a differential lock control. After the opening control of the lifting valve is performed, when the sequence is interrupted by pressing the first read-out button 92, the lifting valve remains open. Therefore, the ground work apparatus 22 is lifted to a predetermined position. When the PTO control and the differential lock control have not yet been performed at the time when the sequence is interrupted, the PTO control and the differential lock control are in a standby state. In this state, when the interrupted first work-travel sequence is resumed by pressing the first read-out button 92, the PTO control and the differential lock control are sequentially executed. In contrast, when the first work-travel sequence is stopped by pressing the second read-out button 93, the lifting valve is also immediately blocked, and the ground work apparatus 22 is held at a position occupied at the time. Therefore, this stopping is effective when an emergency stop or the like is necessary.

The same also applies to the second work-travel sequence. As described above, during execution of a work-travel sequence that has been started once, the execution of the work-travel sequence can be interrupted, resumed, and stopped. In the above description, read-out of a work-travel sequence is performed by a hardware button that is a button arranged in the armrest operation device 4. However, read-out of a work-travel sequence may also be assigned to a software button such as the button 101 or the button 102 that is arranged on the work-travel sequence screen 100. Also in this case, it is advantageous to have a configuration in which, during execution of a work-travel sequence, by similar operations, the execution of the work-travel sequence can be interrupted, resumed, and stopped.

### Other embodiments

(1) In the above-described embodiment, the arrangements of the icons and buttons that configure the work-travel sequence screen 100 and the pictographs of the icons and buttons can be freely selected in addition to the examples illustrated in the drawings.
(2) In the above-described embodiment, the buttons that are configured using the software switches that are arranged in the work-travel sequence screen 100 may be replaced with the hardware switches that are provided in the armrest operation device 4 and the like. Further, it is also possible to prepare both software switches and hardware switches.
(3) The display 13 may be arranged at a different position, apart from the armrest operation device 4. Further, it is also possible that a plurality of the displays 13 is provided mirroring each other.
(4) The functional blocks illustrated in Fig. 5 are merely for purposes of description. The respective functional units can be arbitrarily integrated or arbitrarily divided. In particular, the respective functional parts that construct the arithmetic control device 800 are associated with each other on a software basis. Therefore, it is likely that there are overlaps between the functions the respective functional parts. The division of the functional parts illustrated in Fig. 5 is merely an example. The division of the functional parts is not limited to the one illustrated in Fig. 5.

In addition to a tractor, the traveling work vehicle according to the present embodiment is applicable to an agricultural work vehicle such as a rice transplanter or a combine harvester, or a work vehicle for construction and civil engineering such as a front loader, or the like.

It is noted that the foregoing examples have been provided merely for the purpose of explanation and are in no way to be construed as limiting of the present invention. While the present invention has been described with reference to exemplary preferred embodiments, it is understood that the words which have been used herein are words of description and illustration, rather than words of limitation. Changes may be made, within the purview of the appended claims, as presently stated and as amended, without departing from the scope of the present invention in its aspects. Although the preferred embodiments of the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

## Claims

1. A driving support system for a traveling work vehicle (1) that works and travels utilizing a ground work apparatus (22) that is coupled to a traveling vehicle body (1), comprising:
a device controller (801) configured to output operation control signals to a travel operation device (6) for causing the traveling vehicle body (1) to travel and a work operation device (7A) for causing the ground work apparatus (22) to operate;
a display (13) configured to display operation states of the travel operation device (6) and the work operation device (7A);
storing means (702) configured to store control data in execution processing order as a work-travel sequence, the control data corresponding to the operation control signals;
a read-out means (706) configured to read out the control data stored in the storing means (702) and transmit the control data to the device controller (801);
a screen processor (8) configured to generate, based on the control data, image data to indicate icons in the execution processing order, and output the generated image data to the display (13) so as to display a work-travel sequence screen (100); and
a plurality of work-travel managers (700) configured to manage a plurality of work-travel sequences on the work-travel sequence screen (100),
**characterized in that**
the screen processor (8) is further configured to generate the image data so as to display the work-travel sequence screen (100) on which arranged are:
a sequence selection button group for selecting a work-travel sequence to be activated,
an icon group (110) of said icons illustrating only content of a work-travel sequence that is activated, and
an output timing associated with each icon of the icon group and in a form of a time or a distance as a unit, the output timing being an attribute value of each icon of the icon group.

2. The driving support system according to claim 1, further comprising a plurality of execution processing means, each configured to perform a process,
wherein the screen processor (8) is further configured to generate the image data to indicate the icons each of which corresponds to each execution processing means.

3. The driving support system according to claim 1 or 2, wherein the storing means (702) is configured to store control data based on operation control signals outputted during a teaching travel mode.

4. The driving support system according to any one of claims 1 to 3, further comprising an editor (701) configured to manage editing of the work-travel sequence via the work-travel sequence screen (100).

5. The driving support system according to any one of claims 1 to 4, further comprising an attribute manager (704) configured to assign, on the work-travel sequence screen (100), at least one of a work time and a travel distance to an icon that configures the work-travel sequence.

6. The driving support system according to claim 5, wherein the attribute manager (704) is further configured to determine at least one of the work time and the travel distance to be assigned based on a speed of the traveling vehicle body (1).

7. The driving support system according to any one of claims 1 to 6, wherein the work-travel sequence screen (100) has selection buttons (101-104) adapted to select a work-travel sequence to be displayed on the work-travel sequence screen (100) from the plurality of work-travel sequences that are managed by the plurality of the work-travel managers (700).

8. The driving support system according to any one of claims 1 to 7, wherein:
one of the plurality of the work-travel sequences is a headland-turn-start sequence that includes operation control signals required during transition from work travel to headland turn travel,
another one of the plurality of the work-travel sequences is a headland-turn-end sequence that includes operation control signals required during a transition from the headland turn travel to the work travel, and
the headland-turn-start sequence and the headland-turn-end sequence are managed as a group of sequences on the work-travel sequence screen (100).

9. The driving support system according to claim 7, wherein the headland-turn-start sequence and the headland-turn-end sequence are:
managed via a pair buttons on the work-travel sequence screen (100); and/or
managed via different buttons displayed on the work-travel sequence screen (100).

10. The driving support system according to any one of claims 1 to 9, wherein the output timing is displayed on a left side of each icon.

## Patentansprüche

1. Fahrunterstützungssystem für ein bewegliches Arbeitsfahrzeug (1), das unter Nutzung einer Bodenbearbeitungsvorrichtung (22) arbeitet und sich bewegt, die mit einem beweglichen Fahrzeugaufbau (1) gekoppelt ist, mit:
einer Vorrichtungssteuereinheit (801), die konfiguriert ist, Betriebssteuersignale an eine Bewegungsbetriebsvorrichtung (6), um den beweglichen Fahrzeugaufbau (1) zu veranlassen, sich zu bewegen, und eine Arbeitsbetriebsvorrichtung (7A) auszugeben, um die Bodenbearbeitungsvorrichtung (22) zu veranlassen zu arbeiten;
einer Anzeige (13), die konfiguriert ist, Betriebszustände der Bewegungsbetriebsvorrichtung (6) und der Arbeitsbetriebsvorrichtung (7A) anzuzeigen;
einem Speichermittel (702), das konfiguriert ist, Steuerdaten in einer Ausführungsverarbeitungsreihenfolge als eine Arbeits-/Bewegungsabfolge zu speichern, wobei die Steuerdaten den Betriebssteuersignalen entsprechen;
einem Auslesemittel (706), das konfiguriert ist, die im Speichermittel (702) gespeicherten Steuerdaten auszulesen und die Steuerdaten an die Vorrichtungssteuereinheit (801) zu übertragen;
einem Bildschirmprozessor (8), der konfiguriert ist, beruhend auf den Steuerdaten Bilddaten zu erzeugen, um Piktogramme in der Ausführungsverarbeitungsreihenfolge anzuzeigen, und die erzeugten Bilddaten an die Anzeige (13) auszugeben, um einen Arbeits-/Bewegungsabfolge-Bildschirm (100) anzuzeigen; und
einer Vielzahl von Arbeits-/Bewegungsmanagern (700), die konfiguriert sind, eine Vielzahl von Arbeits-/Bewegungsabfolgen auf dem Arbeits-/Bewegungsabfolge-Bildschirm (100) zu verwalten,
**dadurch gekennzeichnet, dass**
der Bildschirmprozessor (8) ferner konfiguriert ist, die Bilddaten zu erzeugen, um den Arbeits-/Bewegungsabfolge-Bildschirm (100) anzuzeigen, auf dem angeordnet sind:
eine Abfolgeauswahl-Schaltflächengruppe zum Auswählen einer Arbeits-/Bewegungsabfolge, die aktiviert werden soll, eine Piktogrammgruppe (110) der Piktogramme, die nur den Inhalt einer Arbeits-/Bewegungsabfolge darstellen, die aktiviert ist, und
ein Ausgabetiming, das mit jedem Piktogramm der Piktogrammgruppe verknüpft ist und in einer Form einer Zeit oder einer Strecke als Einheit vorliegt, wobei das Ausgabetiming ein Attributwert jedes Piktogramms der Piktogrammgruppe ist.

2. Fahrunterstützungssystem nach Anspruch 1, das ferner eine Vielzahl von Ausführungsverarbeitungsmitteln aufweist, von denen jedes konfiguriert ist, einen Prozess auszuführen, wobei der Bildschirmprozessor (8) ferner konfiguriert ist, die Bilddaten zu erzeugen, um die Piktogramme anzuzeigen, von denen jedes jedem Ausführungsverarbeitungsmittel entspricht.

3. Fahrunterstützungssystem nach Anspruch 1 oder 2, wobei das Speichermittel (702) konfiguriert ist, Steuerdaten zu speichern, die auf Betriebssteuersignalen beruhen, die während eines Lernbewegungsmodus ausgegeben werden.

4. Fahrunterstützungssystem nach einem der Ansprüche 1 bis 3, das ferner einen Editor (701) aufweist, der konfiguriert ist, das Editieren der Arbeits-/Bewegungsabfolge mittels des Arbeits-/Bewegungsabfolge-Bildschirms (100) zu verwalten.

5. Fahrunterstützungssystem nach einem der Ansprüche 1 bis 4, das ferner einen Attributmanager (704) aufweist, der konfiguriert ist, auf dem Arbeits-/Bewegungsabfolge-Bildschirm (100) eine Arbeitszeit und/oder eine Bewegungsstrecke einem Piktogramm zuzuweisen, das die Arbeits-/Bewegungsabfolge konfiguriert.

6. Fahrunterstützungssystem nach Anspruch 5, wobei der Attributmanager (704) ferner konfiguriert ist, die Arbeitszeit und/oder die Bewegungsstrecke, die zugewiesen werden soll, beruhend auf einer Geschwindigkeit des beweglichen Fahrzeugaufbaus (1) zu bestimmen.

7. Fahrunterstützungssystem nach einem der Ansprüche 1 bis 6, wobei der Arbeits-/Bewegungsabfolge-Bildschirm (100) Auswahlschaltflächen (101-104) aufweist, die eingerichtet sind, eine Arbeits-/Bewegungsabfolge, die auf dem Arbeits-/Bewegungsabfolge-Bildschirm (100) angezeigt werden soll, aus der Vielzahl der Arbeits-/Bewegungsabfolgen auszuwählen, die durch die Vielzahl der Arbeits-/Bewegungsmanager (700) verwaltet werden.

8. Fahrunterstützungssystem nach einem der Ansprüche 1 bis 7, wobei:
eine der Vielzahl der Arbeits-/Bewegungsabfolgen eine Vorgewendestartabfolge ist, die Betriebssteuersignale umfasst, die während eines Übergangs von der Arbeitsbewegung zur Vorgewendebewegung benötigt werden,
eine andere der Vielzahl der Arbeits-/Bewegungsabfolgen eine Vorgewendeendabfolge ist, die Betriebssteuersignale umfasst, die während des einen Übergangs von der Vorgewendebewegung zur Arbeitsbewegung benötigt werden, und
die Vorgewendestartabfolge und die Vorgewendeendabfolge als eine Gruppe von Abfolgen auf dem Arbeits-/Bewegungsabfolge-Bildschirm (100) verwaltet werden.

9. Fahrunterstützungssystem nach Anspruch 7, wobei die Vorgewendestartabfolge und die Vorgewendeendabfolge:
mittels eines Paars Schaltflächen auf dem Arbeits-/Bewegungsabfolge-Bildschirm (100) verwaltet werden;
und/oder
mittels unterschiedlicher Schaltflächen verwaltet werden,
die auf dem Arbeits-/Bewegungsabfolge-Bildschirm (100) angezeigt werden.

10. Fahrunterstützungssystem nach einem der Ansprüche 1 bis 9, wobei das Ausgabetiming auf der linken Seite jedes Piktogramms angezeigt wird.

## Revendications

1. Système d'assistance à la conduite pour un engin de chantier mobile (1) qui travaille et se déplace en recourant à un outil de travail de terrain (22) accouplé à une caisse de véhicule mobile (1), comprenant :
une unité de commande de dispositif (801) prévue pour émettre des signaux de commande de fonctionnement vers un dispositif d'actionnement de conduite (6) afin de déclencher le déplacement de la caisse de véhicule mobile (1), et vers un dispositif d'actionnement de travail (7A) afin de déclencher le fonctionnement de l'outil de travail de terrain (22) ;
un afficheur (13) prévu pour afficher des états de fonctionnement du dispositif d'actionnement de conduite (6) et du dispositif d'actionnement de travail (7A) ;
une unité de mémoire (702) prévue pour stocker des données de commande dans l'ordre de traitement d'exécution en tant que séquence travail-conduite, les données de commande correspondant aux signaux de commande de fonctionnement ;
une unité de lecture (706) prévue pour extraire les données de commande stockées dans l'unité de mémoire (702) et transmettre les données de commande à l'unité de commande de dispositif (801) ;
un processeur d'image (8) prévu pour générer sur la base des données de commande des données d'image renvoyant à des icônes dans l'ordre de traitement d'exécution, et
transmettre les données d'image générées à l'afficheur (13) de manière à afficher un écran de séquences travail-conduite (100) ; et
une pluralité de gestionnaires travail-conduite (700) prévus pour administrer une pluralité de séquences travail-conduite sur l'écran de séquences travail-conduite (100),
**caractérisé**
**en ce que** le processeur d'image (8) est en outre prévu pour générer les données d'image de manière à afficher l'écran de séquences travail-conduite (100) sur lequel sont présentés :
un groupe de boutons de sélection de séquence permettant de sélectionner une séquence travail-conduite à activer,
un groupe d'icônes (110) des icônes illustrant exclusivement le contenu d'une séquence travail-conduite activée, et
un rythme de sortie associé à chaque icône du groupe d'icônes et sous la forme d'un temps ou d'une distance en tant qu'unité, le rythme de sortie étant une valeur d'attribut de chaque icône du groupe d'icônes.

2. Système d'assistance à la conduite selon la revendication 1, comprenant en outre une pluralité d'unités de traitement d'exécution, prévues chacune pour l'exécution d'un processus,
le processeur d'image (8) étant en outre prévu pour générer les données d'image renvoyant aux icônes, chacune d'entre elles correspondant à une unité de traitement d'exécution.

3. Système d'assistance à la conduite selon la revendication 1 ou la revendication 2, où l'unité de mémoire (702) est prévue pour stocker des données de commande sur la base de signaux de commande de fonctionnement émis pendant un mode d'apprentissage de conduite.

4. Système d'assistance à la conduite selon l'une des revendications 1 à 3, comprenant en outre un éditeur (701) prévu pour gérer l'édition de la séquence travail-conduite par l'intermédiaire de l'écran de séquences travail-conduite (100).

5. Système d'assistance à la conduite selon l'une des revendications 1 à 4, comprenant en outre un gestionnaire d'attributs (704) prévu pour assigner sur l'écran de séquences travail-conduite (100) un temps de travail et/ou une distance de déplacement à une icône configurant la séquence travail-conduite.

6. Système d'assistance à la conduite selon la revendication 5, où le gestionnaire d'attributs (704) est en outre prévu pour déterminer le temps de travail et/ou la distance de déplacement à assigner sur la base d'une vitesse de la caisse de véhicule mobile (1).

7. Système d'assistance à la conduite selon l'une des revendications 1 à 6, où l'écran de séquences travail-conduite (100) présente des boutons de sélection (101-104) permettant de sélectionner une séquence travail-conduite à afficher sur l'écran de séquences travail-conduite (100) parmi la pluralité de séquences travail-conduite administrées par la pluralité de gestionnaires travail-conduite (700).

8. Système d'assistance à la conduite selon l'une des revendications 1 à 7, où :
une séquence de la pluralité de séquences travail-conduite est une séquence d'initialisation de fourrière comprenant des signaux de commande de fonctionnement exigés pendant la transition d'un déplacement de travail à un déplacement en fourrière,
une autre séquence de la pluralité de séquences travail-conduite est une séquence de fin de fourrière comprenant des signaux de commande de fonctionnement exigés pendant la transition du déplacement en fourrière au déplacement de travail, et
la séquence d'initialisation de fourrière et la séquence de fin de fourrière sont gérées comme groupe de séquences sur l'écran de séquences travail-conduite (100).

9. Système d'assistance à la conduite selon la revendication 7, où la séquence d'initialisation de fourrière et la séquence de fin de fourrière sont :
gérées au moyen d'une paire de boutons sur l'écran de séquences travail-conduite (100) ; et/ou
gérées au moyen de différents boutons affichés sur l'écran de séquences travail-conduite (100).

10. Système d'assistance à la conduite selon l'une des revendications 1 à 9, où le rythme de sortie est affiché sur le côté gauche de chaque icône.
